# EUROPEAN PATENT APPLICATION

(11) **EP 4 415 204 A1**
(43) Date of publication of application: **14.08.2024**
(21) Application number: 24150121.2
(22) Date of filing: 02.01.2024
(51) Int. Cl.: H02J 3/38, H02J 13/00, H04W 48/18

(54) **INFORMATION PROCESSING METHOD, INFORMATION PROCESSING DEVICE, AND NON-TRANSITORY STORAGE MEDIUM**

(30) Priority: 09.02.2023 JP 2023018467
(71) Applicant: TOYOTA JIDOSHA KABUSHIKI KAISHA, Toyota-shi, Aichi-ken, 471-8571 (JP)
(72) Inventor: SHAO, Xiao, 471-8571 Toyota-shi, Aichi-ken (JP)
(74) Representative: Simmons & Simmons

(57) **Abstract**

An information processing method executed by an information processing device (20), includes: acquiring information indicating renewable energy usage related to each of a plurality of selectable candidates for a component included in a cellular network; and selecting a selectable candidate that has potential for using renewable energy from among the plurality of selectable candidates, based on the information indicating the renewable energy usage.

## Description

### BACKGROUND OF THE INVENTION

### 1. Field of the Invention

The present disclosure relates to an information processing method, an information processing device, and a non-transitory storage medium.

### 2. Description of Related Art

As a related art, there has been a technology in which data processing is dynamically allocated to a plurality of data centers, according to the amounts of electric power respectively generated at the data centers by using renewable energy (for example, Japanese Unexamined Patent Application Publication No. 2021-189845).

### SUMMARY OF THE INVENTION

An object of the present disclosure is to provide an information processing method, an information processing device, and a program that enable preferred use of renewable energy in connection with a component included in a cellular network.

An information processing method according to a first aspect of the present disclosure is executed by an information processing device. The information processing method includes: acquiring information indicating renewable energy usage related to each of a plurality of selectable candidates for a component included in a cellular network; and selecting, to be the component, a selectable candidate that has potential for using renewable energy from among the plurality of selectable candidates, based on the information indicating the renewable energy usage.

An information processing device according to a second aspect of the present disclosure includes a control unit. The control unit is configured to execute: acquiring information indicating renewable energy usage related to each of a plurality of selectable candidates for a component included in a cellular network; and selecting, to be the component, a selectable candidate that has potential for using renewable energy from among the plurality of selectable candidates, based on the information indicating the renewable energy usage.

A non-transitory storage medium according to a third aspect of the present disclosure stores instructions that are executable by an information processing device and that cause the information processing device to perform the following functions. The functions include: acquiring information indicating renewable energy usage related to each of a plurality of selectable candidates for a component included in a cellular network; and selecting, to be the component, a selectable candidate that has potential for using renewable energy from among the plurality of selectable candidates, based on the information indicating the renewable energy usage.

Aspects of the present disclosure may include an information processing system including the information processing device, the instructions stored in the non-transitory storage medium, and the like.

According to the present disclosure, preferred use of renewable energy in connection with a component included in a cellular network can be achieved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1A is an explanatory diagram of a fifth-generation mobile communication system network (5G network);
FIG. 1B is another explanatory diagram of the fifth-generation mobile communication system network (5G network);
FIG. 2 is an explanatory diagram of an information processing system;
FIG. 3A shows an example of a configuration of an information processing device;
FIG. 3B shows an example of a configuration of a terminal;
FIG. 4 is a sequence chart showing a communication volume control method;
FIG. 5 is a flowchart showing an example of processing by the information processing device operating as an NWDAF;
FIG. 6 is a flowchart showing an example of processing by the information processing device or a terminal operating as an external server or UE;
FIG. 7 is a sequence chart showing NF selection;
FIG. 8 is a sequence chart showing SMF selection; and
FIG. 9 is a sequence chart showing UPF selection.

### DETAILED DESCRIPTION OF EMBODIMENTS

An information processing method according to an embodiment includes the following.
(1) An information processing device acquires information indicating renewable energy usage related to each of a plurality of selectable candidates for a component included in a cellular network.
(2) Based on the information indicating the renewable energy usage, a selectable candidate that has potential for using more renewable energy is selected from among the plurality of selectable candidates. Throughout this disclosure, the selection of a candidate may be based on actual renewable energy usage, or predicted renewable energy usage, rather than, or in addition to, the potential for using more renewable energy.

According to the information processing method, from among a plurality of candidates for a component, a candidate (component) that has potential for using more renewable energy (green energy) is selected. Thus, active consumption of renewable energy is possible in connection with operation of the component. In other words, preferred use of renewable energy in connection with the component can be achieved.

The renewable energy includes natural energy, such as sunlight, solar heat, wind power, tide, and geothermal heat, as well as biomass energy and recycled energy, such as energy-from-waste.

The cellular network is, for example, a 5G network, but may be a network other than the 5G network. Hereinafter, a description will be given by using the 5G network as an example of the cellular network. The information indicating renewable energy usage is, for example, information indicating an amount of renewable energy available to run the 5G network. Alternatively, the information indicating renewable energy usage is a usage rate of renewable energy (that may be referred to as "a renewable energy utilization rate") in the 5G network (the proportion of a coverage by renewable energy to energy consumed to run the 5G network (a share of consumed energy accounted for by renewable energy)). However, the information indicating renewable energy usage may be other information than the above.

The information processing method may adopt a configuration as follows. Specifically, the component may be any one of AMF, SMF, UPF, and PCF, each included in the 5G network.

The information processing device may acquire information indicating the plurality of selectable candidates from an NRF included in the 5G network. A provision source of the information may be a component other than the NRF. The information processing device may acquire the information indicating renewable energy usage related to each of the plurality of selectable candidates from an NWDAF included in the 5G network.

The information processing device may be configured to operate as an AMF included in the 5G network, and an SMF may be selected as the component. The information processing device may be configured to operate as an SMF included in the 5G network, and a UPF may be selected as the component.

Hereinafter, an information processing system according to an embodiment is described with reference to the drawings. Configurations in the embodiment are given as an illustrative purpose, and do not constitute restrictions.

### Configuration of Information Processing System

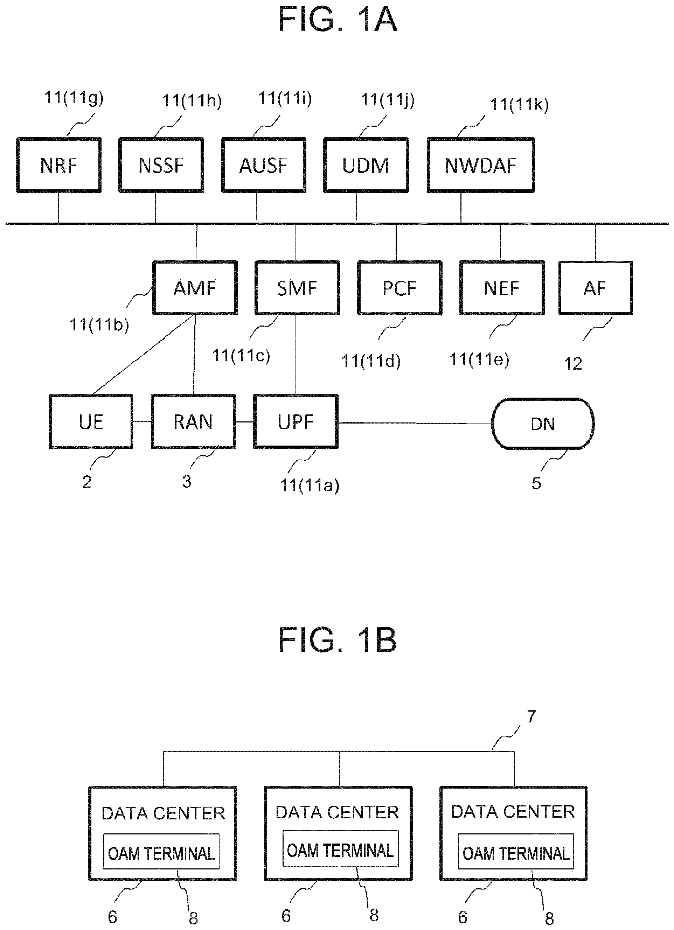

FIG. 1A shows components (constituent elements) included in a fifth-generation mobile communication system network (5G network). In FIG. 1A, user equipment (UE) 2 is a terminal of a user (subscriber). A radio access network (RAN) 3 is an access network to a 5G core network (5GC). The RAN 3 includes a base station (gNB) 3A. The 5G network includes the 5G core network (5GC) and an access network ((R)AN), and the UE 2, a DN 5, and an AF 12 are connected to the 5G network. Each of NFs 11a to 11k is a function implemented by one or two or more computers (information processing devices) executing a program.

The 5GC includes a set of components, each having a predetermined function called network function (NF). In FIG. 1A, the following functions are depicted as NFs 11 included in the 5GC. In FIG. 1A, each NF 11 is indicated by a rectangle enclosed with a thick line.
User plane function (UPF) 11a
Access and mobility management function (AMF) 11b
Session management function (SMF) 11c
Policy control function (PCF) 11d
Network exposure function (NEF) 11e
Network repository function (NRF) 11g
Network slice selection function (NSSF) 11h
Authentication server function (AUSF) 11i
Unified data management (UDM) 11j
Network data analytics function (NWDAF) 11k

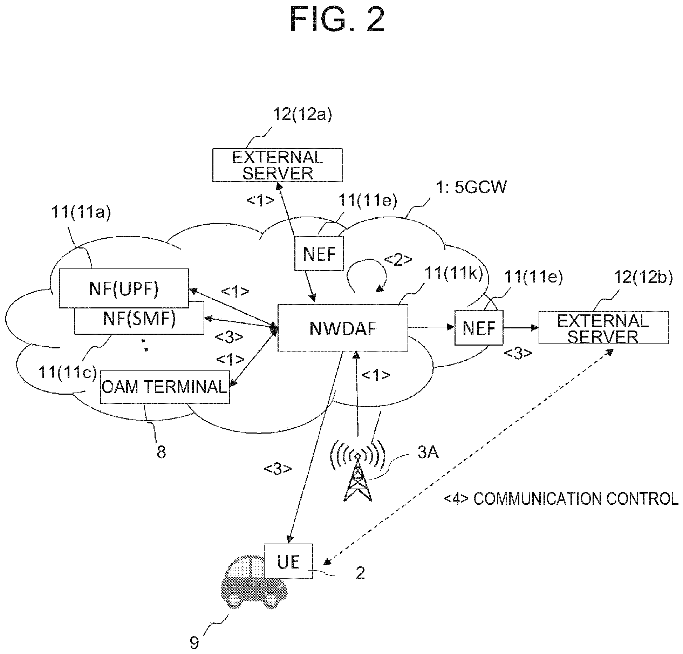

The UPF 11a performs routing and forwarding of a user packet (a user-plane packet transmitted or received by the UE 2), packet inspection, and QoS processing. The AMF 11b is a location accommodating device UE in a 5GC 1 (FIG. 2). The AMF 11b accommodates the RAN 3 and performs subscriber authentication control, location (mobility) management of the UE 2, and the like. The UDM 11j performs provision of subscriber information, or acquisition, registration, deletion, and change of a UE state.

The SMF 11c manages a protocol data unit (PDU) session and controls the UPF 11a in order to perform quality of service (QoS) control and policy control. The PDU session is a virtual communication channel for data exchange between the UE 2 and the data network (DN) 5. The DN 5 is a data network (the Internet or the like) outside of the 5GC.

The PCF 11d, under control of the SMF 11c, performs QoS control, policy control, charging control, and the like. In the QoS control, control for communication quality, such as expedited forwarding of a packet, is performed. In the policy control, communication control for QoS, enabling or disabling packet forwarding, charging, and the like based on network or subscriber information is performed. The NEF 11e plays an intermediate role between an external node such as an application function (AF) 12 and a node within a control plane. The AF 12 is an application server (external server) outside of the 5GC.

The NRF 11g stores and manages information on NFs (for example, AMF, SMF, UPF, and the like) in the 5GC 1 (FIG. 2). In response to an inquiry about an NF desired to be used, the NRF 11g can return a plurality of candidates for the NF to the source of the inquiry.

The NSSF 11h has a function of selecting a network slice to be used by a subscriber from among network slices generated by network slicing. A network slice is a virtual network having specifications according to a purpose of use.

The AUSF 11i is a subscriber authentication server that performs subscriber authentication, under control of the AMF 11b. The UDM 11j keeps subscriber-related information. The NWDAF 11k has a function of collecting and analyzing data from each NF 11, an operations, administration, and maintenance (OAM) terminal 8 (FIG. 2), an external server 12a (FIG. 2), and the like. The NWDAF 11k is an NF that provides network analysis information.

Each NF that forms the 5GC is configured by using a single or a plurality of information processing devices (server, network equipment, and the like). The information processing devices are installed in a special building called data center. A data center is also referred to as station building. As shown in FIG. 1B, one or two or more (three in FIG. 1B, as an example) data centers 6 are deployed in a communication area of the 5GC, and the data centers 6 are connected to each other through a communication line 7. An OAM terminal 8 is provided to each data center 6. The OAM terminal 8 has a function of performing operations, administration, and maintenance of the network (5GC).

In some cases, a plurality of NFs of the same type may be prepared in the 5GC. For example, there is a case where the NFs 11 are prepared in each data center 6. There are also some cases where one NF 11 may be shared among the data centers 6. There are also some cases where a plurality of NFs 11 of the same type may be configured in a single data center 6. The number of data centers 6, the number of NFs 11, and correspondences between NFs 11 and data centers 6 can be set or configured as appropriate.

FIG. 2 is an explanatory diagram of the information processing system according to the embodiment. The 5GC 1 shown in FIG. 2 includes the NFs 11 (11a to 11k) shown in FIG. 1A. The UE 2 can exchange data with a communicating party (DN 5) through the 5GC 1 by wirelessly connecting to the base station 3A included in the RAN 3. In an example shown in FIG. 2, the UE 2 is mounted in a vehicle 9. However, the UE 2 does not need to be an on-board terminal. The vehicle 9 may be a vehicle driven by a human, or may be an autonomous driving vehicle.

In the embodiment, part of electric power to run the 5G network (5GC 1 and RAN 3), that is, to operate the information processing devices included in the 5G network, can be covered by using renewable energy.

The NWDAF (data analysis unit) 11k collects and analyzes information (usage information; an example of first information) indicating renewable energy usage in the whole 5G network, or in a fraction thereof. The renewable energy usage information is at least one of the available amount of renewable energy and the usage rate of renewable energy (the proportion of a coverage by renewable energy to electric power used). The NWDAF 11k transmits information (an example of second information) obtained through the analysis to a device (an example of a second device) that performs processing related to communications going through the 5G network.

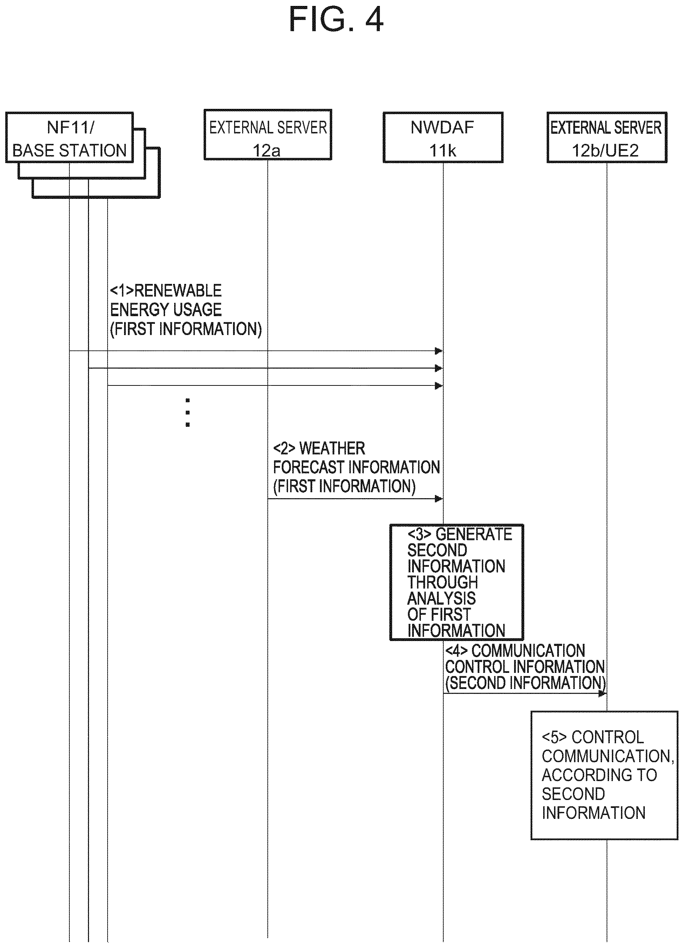

The NWDAF 11k can acquire the usage information from at least one (corresponding to a first device) of the NFs 11 (for example, the UPF 11a, the SMF 11c, the AMF 11b, the PCF 11d, the UDM 11j, and the like), the base station 3A, and the external server 12a (FIG. 4, <1> <2>). Types of the NFs 11 are not limited to the types illustrated above, and a new NF may be included.

The acquisition of the usage information is performed, for example, by receiving the usage information that is regularly transmitted from a provision-source device. The NWDAF 11k may transmit a request for provision and acquire the usage information transmitted by the provision source as a response to the request. The number of provision-source devices and the scope (unit) of the usage information kept by the provision-source device can be set or configured as appropriate.

The scope of the usage information is the whole 5G network or a fraction (for example, on an NF basis) of the 5G network. The provision source of the usage information may be the OAM terminal 8. From the OAM terminal 8, information indicating renewable energy usage on a data center (station building) 6 basis and the information processing devices (NFs 11 corresponding to the information processing devices) installed (accommodated) in the data center 6 can be acquired. As described above, the scope (area) of usage and communication control can be configured as appropriate.

The usage information may be information indicating usage in the whole 5G network, or may be information indicating usage in a fraction of the 5G network. The number of provision-source devices may be one or two or more. The information indicating the usage in the whole 5G network may be obtained by the NWDAF 11k aggregating the usage information (indicating partial usage in the 5G network) collected from a plurality of provision-source devices.

The NWDAF 11k can collect weather forecast (forecasts of the amount of insolation, the volume of air, and the like) information from the external server 12a connected to the 5GC via the NEF 11e. The external server 12a is an example of the first device, and the weather forecast information is an example of the first information.

The NWDAF 11k generates, by using (analyzing) the collected information (first information), at least one of information indicating usage (an available amount and a usage rate of renewable energy) at the current time point and information indicating predicted usage at a future time point (FIG. 4, <3>). The number of future time points (time points of prediction) and the length of time between time points of prediction (the elapsed time from each current time point) can be set as appropriate. However, the acquisition of the weather forecast information can be omitted when at least one of the available amount and the usage rate of renewable energy in the usage at the current time point is calculated and no prediction is performed.

The NWDAF 11k transmits the information indicating at least one of the current usage and the future usage (an example of the second information) to a predetermined destination (FIG. 4, <4>). The predetermined destination is, for example, at least one of an external server 12b connected to the NWDAF 11k via the NEF 11e, the UE 2, and a predetermined NF 11. Each of the external server 12b, the UE 2, and the predetermined NF 11 is an example of the "device that performs processing related to communications". Examples of the NF 11 include, but are not limited to, the UPF 11b, the SMF 11c, the AMF 11b, the PCF 11d, the UDM 11j, and the like.

Based on the information indicating the current or future usage, the NWDAF 11k may transmit, to the predetermined destination, information prompting an increase or a decrease in communication volume going through the 5G network. At the time, information may be included that designates a time window in which the communication volume is increased or decreased.

The transmission of the second information may be performed through any one of a subscribe/notify scheme and a request/response scheme (as specified in TS23.288, clause 6.1). When the subscribe/notify scheme is applied, the transmission of the information prompting an increase in communication volume (an example of the second information) is performed, for example, when the available amount or the usage rate of renewable energy exceeds a first threshold value. The transmission of the information prompting a decrease in communication volume (an example of the second information) is performed, for example, when the available amount or the usage rate of renewable energy falls below a second threshold value. The first threshold value and the second threshold value may be the same values, or may be different values. For the first and second threshold values, different values are prepared for the available amount, from values for the usage rate. When the request/response scheme is applied, the NWDAF 11k transmits the second information to a provision destination of the second information, in response to a request from the provision destination.

The external server 12b and the UE 2 can control communication, based on the second information (FIG. 4, <5>). For example, when the information prompting an increase in communication volume is received, the external server 12b that has received the second information increases, in a designated time window, the transmission rate of packets to transmit to a downlink. Alternatively, the UE 2 that has received the second information increases, in a designated time window, the transmission rate of packets to transmit to an uplink.

Due to the increased transmission rate, the quantity of packets transmitted per unit time grows. Accordingly, the load of packet forwarding processing along a packet forwarding path (for example, at the base station 3A, the UPF 11a, the NEF 11e) in the 5G network increases, so that electric power consumption rises. Thus, renewable energy can be consumed in a preferred manner for packet forwarding. Conversely, as a result of the transmission of the second information, the packet transmission rate of the external server 12b, the UE 2 is decreased. Packet transmission may be stopped. Thus, the load of forwarding processing in the 5G network decreases, and electric power consumption using other energy than renewable energy is restrained. Through such an increase or a decrease in transmission rate (stop or resumption of communication), renewable energy can be designed to be consumed efficiently. The information prompting an increase or a decrease in communication volume may be transmitted to an NF 11 (for example, the PCF 11d, the SMF 11c, the UPF 11a, or the like).

### Configurations of Information Processing Device and Terminal

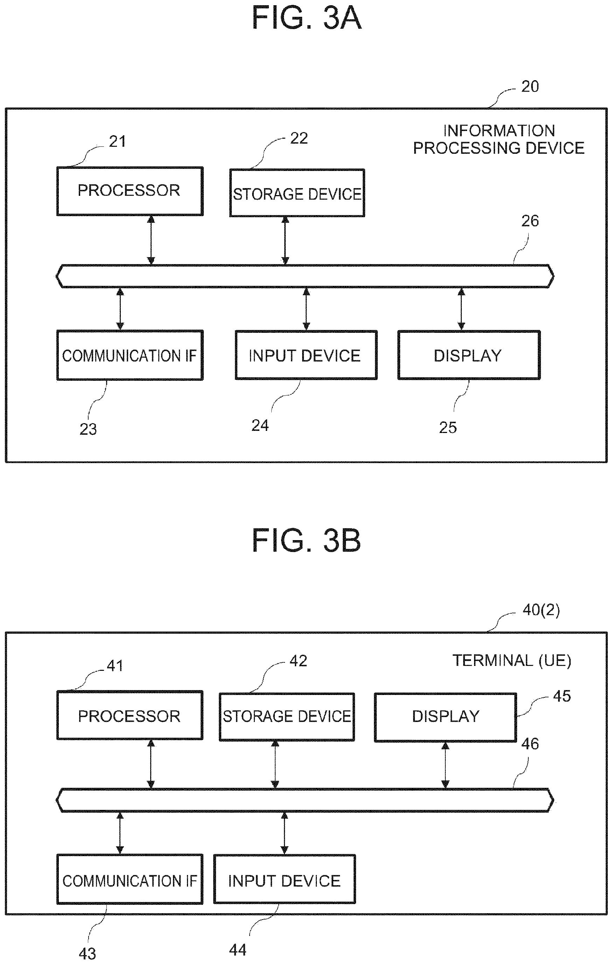

FIG. 3A shows an example of a configuration of the information processing device that can operate as each of the NFs 11a to 11k, the OAM terminal 8, and the external servers 12a and 12b. In FIG. 3A, the information processing device 20 can be configured by using a dedicated or general-purpose information processing device (computer), such as a personal computer (PC), a workstation (WS), or a server machine. However, the information processing device 20 may be an aggregation (cloud) of one or two or more computers.

The information processing device 20 includes a processor 21, as a processing unit or control unit (controller), a storage device 22, a communication interface 23 (communication IF 23), an input device 24, and a display 25, which are connected to each other through a bus 26.

The storage device 22 includes a main storage device and a secondary storage device. The main storage device is used for at least one of a storage area for a program and data, a deployment area for the program, a work area for the program, and a buffer area for communication data. The main storage device is configured by using a random access memory (RAM) or a combination of a RAM and a read only memory (ROM). The secondary storage device is used for a storage area for data and a program. A non-volatile storage medium is applied to the secondary storage device. The non-volatile storage medium is, for example, a hard disk, a solid state drive (SSD), a flash memory, an electrically erasable programmable read-only memory (EEPROM), or the like. The storage device 22 can include a drive device for a disk recording medium.

The communication IF 23 is a circuit that performs communication processing. For example, the communication IF 23 is a network interface card (NIC). The communication IF 23 may be a wireless communication circuit that performs wireless communication (5G, wireless LAN (Wi-Fi), BLE, or the like). The communication IF 23 may be a combination of a circuit that performs wired communication processing and a wireless communication circuit.

The input device 24 includes a key, a button, a pointing device, a touch panel, and the like, and is used to input information. The display 25 is, for example, a liquid crystal display or the like, and displays information and data.

The processor 21 (an example of the control unit) performs various processing by executing various programs stored in the storage device 22. The processor 21 executes the programs stored in the storage device 22, whereby the information processing device 20 can operate as each of the NFs 11a to 11k, the OAM terminal 8, and the external servers 12a and 12b.

FIG. 3B shows an example of a configuration of a terminal 40 that can operate as the UE 2. The terminal 40 includes a processor 41, a storage device 42, a communication interface 43 (communication IF 43), an input device 44, and a display 45, which are connected to each other through a bus 46. For the processor 41, the storage device 42, the communication IF 43, the input device 44, and the display 45, similar devices to those used for the processor 21, the storage device 22, the communication IF 23, the input device 24, and the display 25 can be used. Accordingly, a description thereof is omitted.

The processors 21 and 41 are, for example, central processing units (CPUs). A CPU is also referred to as microprocessor unit (MPU). The processors 21 and 41 may have a single-processor configuration, or may have a multi-processor configuration. A single physical CPU, which is connected through a single socket, may have a multi-core configuration. The processors 21 and 41 may include an arithmetic device with any of various circuit configurations, such as a digital signal processor (DSP) or a graphics processing unit (GPU). The processors 21 and 41 may have a configuration that cooperates with at least one of an integrated circuit (IC), any other digital circuit, an analog circuit, and the like. Examples of the integrated circuit includes an LSI, an application specific integrated circuit (ASIC), a programmable logic device (PLD), and the like. Examples of the PLD include a field-programmable gate array (FPGA). The processors 21 and 41 also include, for example, a microcontroller (MCU), a system-on-a-chip (SoC), a system LSI, or any of those called chipset or the like.

### Examples of Processing

FIG. 4 is a sequence chart showing an example of processing in the information processing system. A predetermined NF 11 and the base station 3A in the 5GC 1 periodically transmit, to the NWDAF 11k, information indicating renewable energy usage (usage information) kept (stored) by the predetermined NF 11 and the base station 3A (FIG. 4, <1>). The transmission of the usage information may be performed in response to a request from the NWDAF 11k.

The external server 12a periodically transmits, to the NWDAF 11k, weather forecast information kept (stored) by the external server 12a (FIG. 4, <2>). The transmission of the weather forecast information may be performed in response to a request from the NWDAF 11k. When prediction based on the weather forecast information is not performed, reception of the weather forecast information may be omitted.

The NWDAF 11k analyzes the usage information and the weather forecast information and generates second information (FIG. 4, <3>). For example, based on the usage information and the weather forecast information, the NWDAF 11k generates communication control information (for example, information prompting an increase in communication volume in a predetermined time window).

The NWDAF 11k transmits the communication control information to the external server 12b and the UE 2 (FIG. 4, <4>). Each of the external server 12b and the UE 2 performs communication control based on the communication control information (FIG. 4, <5>). For example, the communication control information can include information suggesting that a limitation on types of data be lifted (prompting an increase in communication volume), in an area where and a time window when renewable energy is sufficiently available. In such a case, the external server 12b and the UE 2 transmit all types of data. In contrast, in an area where and a time window when renewable energy is insufficient, the communication control information can include information suggesting that low-delay data be transmitted and transmission of others than the low-delay data be stopped (prompting a decrease in communication volume). The external server 12b and the UE 2 transmit only low-delay data.

Here, as an example of the communication control, a configuration can be adopted in which a threshold value for the available amount of renewable energy is set beforehand, and when an available amount exceeds the threshold value, the communication control information is transmitted such that each of the external server 12b and the UE 2 transmits packets without limitation. When an available amount is less than the threshold value, a limitation is imposed on packet transmission. A configuration can also be adopted in which the usage rate of renewable energy is separated into several stages, a type of data allowed to be transmitted in each stage is defined, and transmission of a type of data according to a usage rate is performed.

Moreover, a configuration may be adopted in which the NWDAF 11k transmits the communication control information when the base station 3A, the UPF 11a, and the like are changed (a change occurs in communication path) due to a handover of the UE 2 or the like.

The NWDAF 11k may find out, by using a position information prediction function, the base station 3A and the UPF 11a that will be used by the UE 2 in the future, and may use such findings in future communication control.

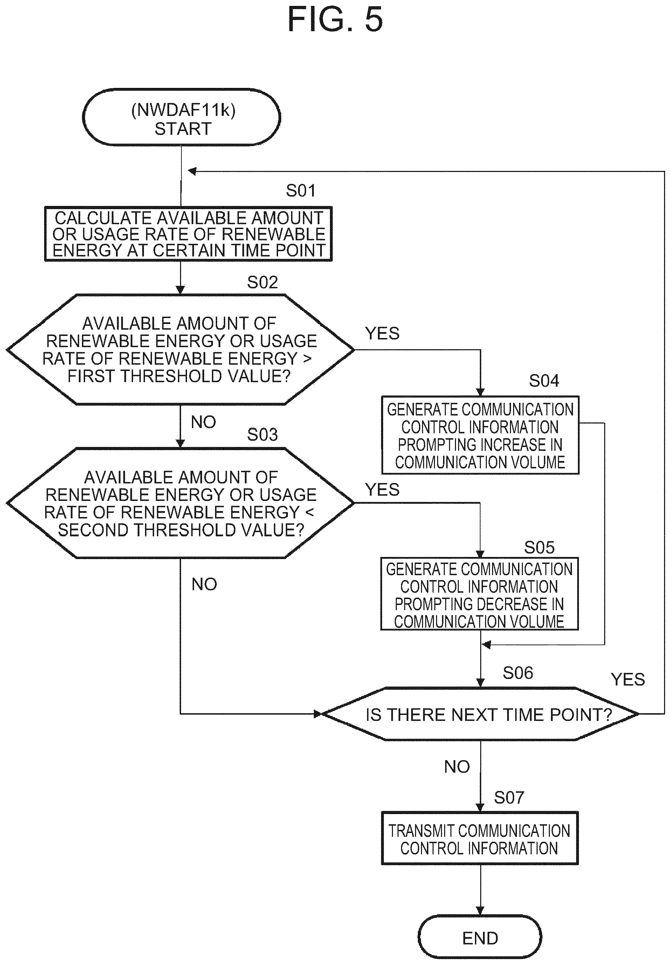

FIG. 5 is a flowchart showing an example of processing by the information processing device 20 operating as the NWDAF 11k. FIG. 5 shows an example of analysis processing by the NWDAF 11k (FIG. 4, <3>), and the processing shown in FIG. 5 is performed by the processor 21 of the information processing device 20.

In step S01, the processor 21 calculates information indicating an available amount or a usage rate (usage) of renewable energy at a certain time point. The certain time point refers to the current time point, or one or two or more future time points. The number of the future time points is set beforehand. In the present embodiment, the future time points are set such that usage 30 minutes after and usage one hour after the current time point are predicted. In first-time step S01, information indicating usage at the current time point is calculated.

In step S02, the processor 21 determines whether or not a value indicating the available amount or the usage rate of renewable energy exceeds the first threshold value (is more than the first threshold value). The processing moves to step S04 when it is determined that the value indicating the available amount or the usage rate of renewable energy exceeds the first threshold value, and moves to step S03 otherwise.

In step S03, the processor 21 determines whether or not the value indicating the available amount or the usage rate of renewable energy falls below the second threshold value (is less than the second threshold value). The processing moves to step S05 when the value indicating the available amount or the usage rate of renewable energy falls below the second threshold value, and moves to step S06 otherwise.

In step S04, the processor 21 generates communication control information prompting an increase in communication volume in a time window including the certain time point, and then moves the processing to step S06. The communication control information can include, for example, information suggesting that the transmission rate be increased or maintained, or communication be resumed, in the time window.

In step S05, the processor 21 generates communication control information prompting a decrease in communication volume in the time window including the certain time point, and then moves the processing to step S06. The communication control information is, for example, information suggesting that the transmission rate be decreased, or communication be temporarily stopped, in the time window.

In step S06, the processor 21 determines whether or not there is a next time point (in the present embodiment, each of the time points 30 minutes later and one hour later) to perform the processing in steps S01 to S05. At the time, the processing returns to step S01 when it is determined that there is a next time point, and moves to step S07 otherwise. When the processing returns to step S01, a predicted value of the available amount or the usage rate of renewable energy at the next time point (for example, 30 minutes after the current time point) is calculated based on weather forecast information.

In step S07, the processor 21 transmits the communication control information corresponding to each time point to a predetermined destination (for example, at least one of the external server 12b and the UE 2). Thereafter, the processing shown in FIG. 5 is terminated.

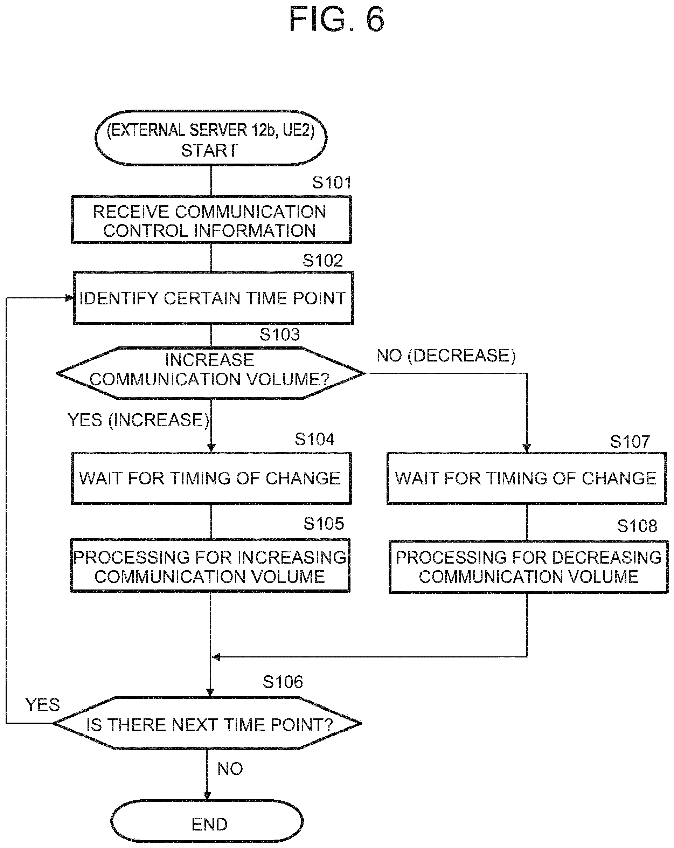

FIG. 6 is a flowchart showing an example of processing by the information processing device 20 operating as the external server 12b, or by the terminal 40 operating as the UE 2. FIG. 6 shows an example of communication control by the external server 12b or the UE 2 (FIG. 4, <5>). The processing shown in FIG. 6 is performed by the processor 21 of the information processing device 20 (external server 12b), or the processor 41 of the terminal 40 (UE 2). In the following description, the processing by the processor 21 of the information processing device 20 is illustrated. The processing by the processor 41 is similarly performed.

In step S101, the processor 21 receives communication control information. In step S102, a certain time point included in the communication control information is identified. In the present embodiment, the processor 21 identifies the current time point, a time point 30 minutes later, and a time point one hour later. In the processing at first-time step S 102, the current time point is identified.

In step S103, it is determined whether or not communication control at the time point identified in step S 102 is to increase the communication volume. The processing moves to step S 104 when it is determined to increase the communication volume, and moves to step S107 otherwise (to decrease the communication volume).

In step S 104, the processor 21 waits for, as a timing of a change, the current time to reach a beginning time of a time window corresponding to the time point identified in step S 102.

In step S105, as processing for increasing the communication volume, the processor 21 performs processing of raising the packet transmission rate, lifting a limitation on types of packets allowed to be transmitted, or the like. At the time, when the transmission rate has reached an upper limit, or when the limitation is already lifted, the transmission rate or the state of the limitation being lifted is maintained. Thereafter, the processing moves to step S106.

In step S 106, the processor 21 determines whether or not there is a next time point (in the present embodiment, each of the time points 30 minutes later and one hour later) to perform the processing in steps S102 to S105 and S107 to S108. At the time, the processing returns to step S 102 when it is determined that there is a next time point. Otherwise, the processing in FIG. 6 is terminated. When the processing returns to step S 102, a next time point (for example, 30 minutes after the current time point) is identified, and the processing in and after step S 103 is performed.

In step S 107, the processor 21 waits for, as a timing of a change, the current time to reach the beginning time of the time window corresponding to the time point identified in step S102.

In step S108, as processing for decreasing the communication volume, the processor 21 performs processing of lowering the packet transmission rate, limiting (strengthening a limitation on) types of packets allowed to be transmitted, temporarily stopping transmitting packets, or the like. At the time, when the transmission rate has reached a lower limit, when the limitation is already imposed, or when transmission is already temporarily stopped, the transmission rate, the state of the limitation being imposed, or the state of transmission being temporarily stopped is maintained. Thereafter, the processing moves to step S106.

### NF Selection according to Renewable Energy Usage

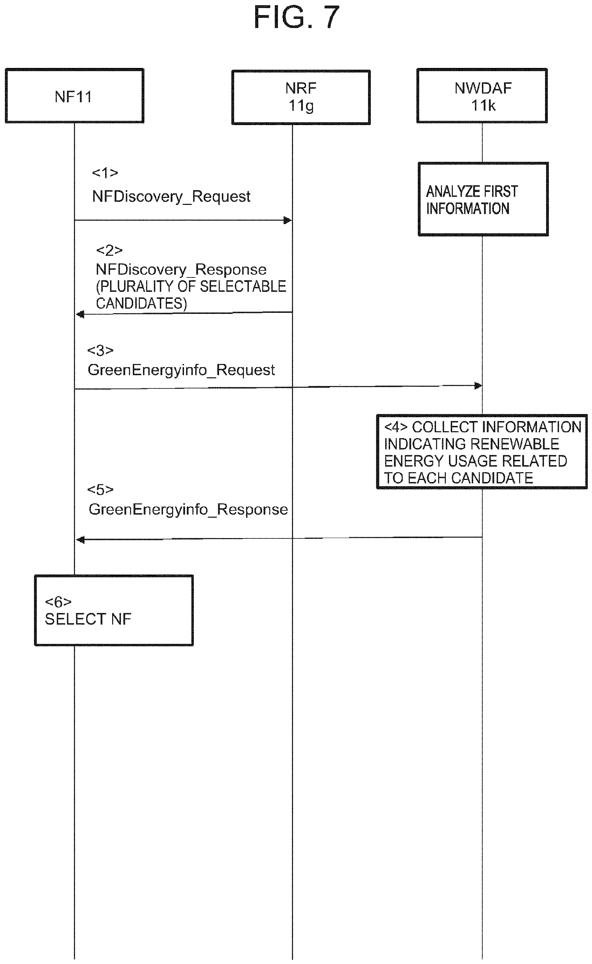

FIG. 7 is a sequence chart showing an example of processing related to NF selection. In the 5G network shown in FIG. 1A, it is assumed that a plurality of NFs 11 of the same type is prepared and is in a selectable state. Information related to each of the plurality of NFs 11 is stored in the NRF 11g. Each NF 11 transmits, to the NRF 11g, a message requesting provision of information on a desired NF (NFDiscovery_Request) (FIG. 7, <1>).

When the request for provision is received, the NRF 11g reads, from the storage device, information on a plurality of NFs 11 applying to the request for provision. The information on the plurality of NFs 11 is included in a response message (NFDiscovery_Response) and transmitted to the request-source NF 11 (FIG. 7, <2>).

The NF 11 receives the information on the plurality of NFs 11, as information on a plurality of selectable candidates. The NF 11 generates a message requesting information indicating renewable energy usage (GreenEnergyinfo_Request) from each of the plurality of NFs 11 that are selectable candidates, and transmits the message to the NWDAF 11k (FIG. 7, <3>).

When the request message is received, the NWDAF 11k refers to the information on the plurality of NFs 11 that are selectable candidates included in the request message, and collects information indicating renewable energy usage related to the plurality of NFs 11 (FIG. 7, <4>).

In the present embodiment, each NF 11 (each device capable of operating as a NF 11) can use renewable energy and other energy than renewable energy to cover electric power for own operation. Each NF 11 stores information indicating the proportion of a coverage by renewable energy to energy consumed (electric power consumption), that is, the usage rate of renewable energy. In response to an inquiry (a request to provide information) from the NWDAF 11k, each NF 11 provides the stored information indicating the usage rate to the NWDAF 11k.

Note that instead of the usage rate of renewable energy, information indicating the amount of renewable energy available to each NF 11 may be used. The information indicating the usage rate may be stored in a place of storage other than each NF 11, and the NWDAF 11k may acquire the information from the place of storage other than each NF 11.

The NWDAF 11k transmits, to the request-source NF 11, the information indicating the usage rates related to the plurality of NFs 11 that are selectable candidates (an example of the information indicating renewable energy usage) (FIG. 7, <5>; see a response message "GreenEnergyinfo_Response"). Note that instead of the usage rate of renewable energy, the information indicating the available amount of renewable energy may be transmitted.

The NF 11 compares the usage rates related to the plurality of NFs 11 that are selectable candidates, and selects an NF 11 having the highest usage rate (FIG. 7, <6>). Thus, the NF 11 with the best renewable energy usage can be selected from among the plurality of selectable candidates. Note that, when the information indicating the available amount of renewable energy is transmitted instead of the usage rate of renewable energy, NF 11 compares the amount of renewable energy available to the plurality of NFs 11 that are selectable candidates, and selects an NF 11 having the largest amount of renewable energy available.

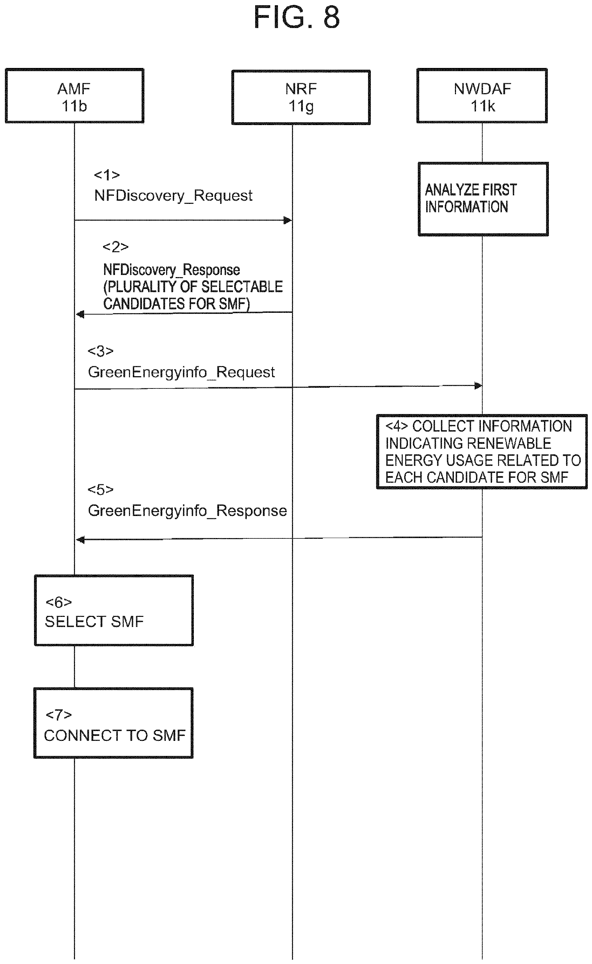

FIG. 8 is a sequence chart showing an example of processing related to selection of the SMF 11c by the AMF 11b. The AMF 11b provides authentication of the UE 2, authorization, mobility management, and the like. Moreover, the AMF 11b controls the SMF 11c. The SMF 11c performs management of a PDU session (hereinafter, referred to as session) of the UE 2, assignment of an IP address, and selection and control of the UPF 11a for data (user packet) forwarding.

A session via the UPF 11a is established between the UE 2 and the DN 5, and one or two or more service data flows (SDF) are configured within the session. The UPF 11a performs packet forwarding.

The AMF 11b transmits, to the NRF 11g, a message requesting provision of information on the SMF 11c (FIG. 8, <1>).

When the request for provision is received, the NRF 11g transmits, to the AMF 11b, information on a plurality of SMFs 11c applying to the request for provision (information on the plurality of SMFs 11c that are selectable candidates) (FIG. 8, <2>).

The AMF 11b generates a message requesting information indicating renewable energy usage from each of the plurality of SMFs 11c that are selectable candidates, and transmits the message to the NWDAF 11k (FIG. 8, <3>).

When the request message is received, the NWDAF 11k collects information indicating renewable energy usage related to the plurality of SMFs 11c that are selectable candidates included in the request message (FIG. 8, <4>). For example, the NWDAF 11k acquires the information indicating usage (a usage rate) from each of the plurality of SMFs 11c that are selectable candidates.

The NWDAF 11k transmits, to the AMF 11b, the information indicating the usage rates related to the plurality of SMFs 11c that are selectable candidates (FIG. 8, <5>).

The AMF 11b compares the usage rates related to the plurality of SMFs 11c that are selectable candidates, and selects an SMF 11c having the highest usage rate (FIG. 8, <6>). Thus, the SMF 11c with the best renewable energy usage can be selected from among the plurality of selectable candidates.

The AMF 11b connects to the selected SMF 11c and controls the SMF 11c with respect to session management for the UE 2. Thus, the selected SMF 11c, under control of the AMF 11b, performs processing for establishing and managing a session of the UE 2. As described above, in selection of the SMF 11c, the usage rates of renewable energy at selectable candidates can be taken into consideration.

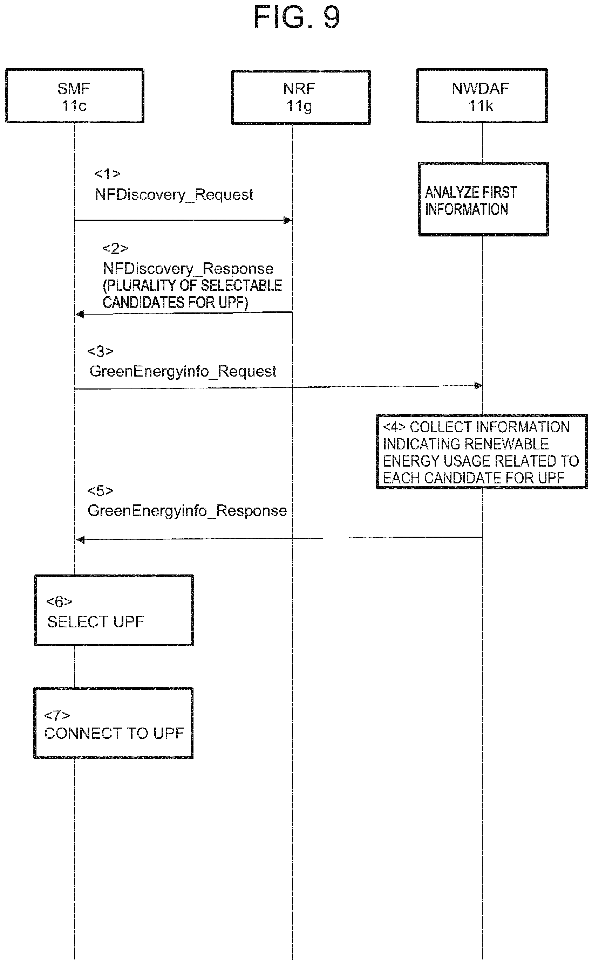

FIG. 9 is a sequence chart showing an example of processing related to selection of the UPF 11a by the SMF 11c. As mentioned above, the SMF 11c performs selection and control of the UPF 11a for data (user packet) forwarding.

The SMF 11c transmits, to the NRF 11g, a message requesting provision of information on the UPF 11a (FIG. 9, <1>).

When the request for provision is received, the NRF 11g transmits, to the SMF 11c, information on a plurality of UPFs 11a applying to the request for provision (information on the plurality of UPFs 11a that are selectable candidates) (FIG. 9, <2>).

The SMF 11c generates a message requesting information indicating renewable energy usage from each of the plurality of UPFs 11a that are selectable candidates, and transmits the message to the NWDAF 11k (FIG. 9, <3>).

When the request message is received, the NWDAF 11k collects information indicating renewable energy usage related to the plurality of UPFs 11a that are selectable candidates included in the request message (FIG. 9, <4>). For example, the NWDAF 11k acquires the information indicating usage (a usage rate) from each of the plurality of UPFs 11a that are selectable candidates.

The NWDAF 11k transmits, to the SMF 11c, the information indicating the usage rates related to the plurality of UPFs 11a that are selectable candidates (FIG. 9, <5>).

The SMF 11c compares the usage rates related to the plurality of UPFs 11a that are selectable candidates, and selects a UPF 11a having the highest usage rate (FIG. 9, <6>). Thus, the UPF 11a with the best renewable energy usage can be selected from among the plurality of selectable candidates.

The SMF 11c connects to the selected UPF 11a, and controls the UPF 11a in order to manage a session of the UE 2. As described above, also in selection of the UPF 11a, the usage rates of renewable energy at selectable candidates can be taken into consideration.

Although the selection of the SMF 11c and the selection of the UPF 11a are described, the procedure shown in the sequence chart of FIG. 7 can also be applied to the AMF 11b, the PCF 11d, and the other NFs 11.

### Operation and Advantageous Effects of the Embodiment

In the information processing system according to the embodiment, the information processing device operating as an NF 11 acquires information indicating a usage rate of renewable energy related to each of a plurality of selectable candidates for a component (NF 11) included in the 5G network. Moreover, based on the information indicating the usage rates, the information processing device can select a selectable candidate having potential for using more renewable energy, that is, a candidate having the best usage rate, from among the plurality of selectable candidates. Thus, active consumption of renewable energy is possible, so that renewable energy can be used in a preferred manner.

In the information processing system according to the embodiment, for NFs 11 to serve as AMF, SMF, UPF, PCF, and the like, selection is possible that takes the usage rate of renewable energy into consideration.

The embodiment and modifications are only examples, and the present disclosure can be implemented with a change being made as appropriate without departing from the scope of the present disclosure. The processes and means described in the present disclosure can be freely combined and implemented to the extent that there is no technical inconsistency.

Any processing described as being performed by a single device may be performed by a plurality of devices in a shared manner. Alternatively, the processing described as being performed by different devices may be performed by a single device. In the computer system, it can be flexibly changed what hardware configuration (server configuration) is used to implement each function.

The present disclosure can also be implemented by providing a computer with a computer program in which the functions described in the embodiment are packaged, and by one or more processors included in the computer reading and executing the program. Such a computer program may be provided to the computer by using a non-transitory computer-readable storage medium capable of connecting to a system bus of the computer, or may be provided to the computer via a network. Examples of the non-transitory computer-readable storage medium include any types of disks, such as magnetic disks (floppy(R) disk, hard disk drive (HDD), and the like) and optical discs (CD-ROM, DVD disc, Blu-ray Disc, and the like), and any types of media suitable to store electronic instructions, such as a read only memory (ROM), a random access memory (RAM), an EPROM, an EEPROM, a magnetic card, a flash memory, and an optical card.

## Claims

1. An information processing method executed by an information processing device (20), comprising:
acquiring information indicating renewable energy usage related to each of a plurality of selectable candidates for a component included in a cellular network; and
selecting, to be the component, a selectable candidate that has potential for using renewable energy from among the plurality of selectable candidates, based on the information indicating the renewable energy usage.

2. The information processing method according to claim 1, wherein the information indicating the renewable energy usage is information indicating an amount of renewable energy available to, or a renewable energy utilization rate at, each of the plurality of selectable candidates.

3. The information processing method according to claim 1 or claim 2, wherein the component is any one of an access and mobility management function (AMF) (11b), a session management function (SMF) (11c), a user plane function (UPF) (1 1a), and a policy control function (PCF) (11d), each included in the cellular network.

4. The information processing method according to any preceding claim, further comprising acquiring information indicating the plurality of selectable candidates from a network repository function (NRF) (11g) included in the cellular network.

5. The information processing method according to any preceding claim, wherein the information indicating the renewable energy usage related to each of the plurality of selectable candidates is acquired from a network data analytics function (NWDAF) (11k) included in the cellular network.

6. The information processing method according to any preceding claim, further comprising operating as an access and mobility management function (AMF) (11b) included in the cellular network,
wherein the component is a session management function (SMF) (11c).

7. The information processing method according to any of claims 1 to 6, further comprising operating as a session management function (SMF) (11c) included in the cellular network,
wherein the component is a user plane function (UPF) (11a).

8. An information processing device (20) comprising a control unit, the control unit being configured to execute:
acquiring information indicating renewable energy usage related to each of a plurality of selectable candidates for a component included in a cellular network; and
selecting, to be the component, a selectable candidate that has potential for using renewable energy from among the plurality of selectable candidates, based on the information indicating the renewable energy usage.

9. The information processing device (20) according to claim 8, wherein the information indicating the renewable energy usage is information indicating an amount of renewable energy available to, or a renewable energy utilization rate at, each of the plurality of selectable candidates.

10. The information processing device (20) according to claim 8 or claim 9, wherein the component is any one of an access and mobility management function (AMF) (11b), a session management function (SMF) (11c), a user plane function (UPF) (11a), and a policy control function (PCF) (11d), each included in the cellular network.

11. The information processing device (20) according to any of claims 8 to 10, wherein the control unit is configured to acquire information indicating the plurality of selectable candidates from a network repository function (NRF) (11g) included in the cellular network.

12. The information processing device (20) according to any of claims 8 to 11, wherein the control unit is configured to acquire the information indicating the renewable energy usage related to each of the plurality of selectable candidates from a network data analytics function (NWDAF) (11k) included in the cellular network.

13. The information processing device (20) according to any of claims 8 to 12, wherein the information processing device (20) is configured to operate as an access and mobility management function (AMF) (11b) included in the cellular network, and
the component is a session management function (SMF) (11c).

14. The information processing device (20) according to any of claims 8 to 12, wherein the information processing device (20) is configured to operate as a session management function (SMF) (11c) included in the cellular network, and
the component is a user plane function (UPF) (11a).

15. A non-transitory storage medium storing instructions that are executable by an information processing device (20) and that cause the information processing device (20) to perform the information processing method according to any one of claims 1 to 7.
